**Europäisches Patentamt**

**European Patent Office**

**Office européen des brevets**

(11) Veröffentlichungsnummer: **0 037 848**
**B1**

(12) # EUROPÄISCHE PATENTSCHRIFT

(45) Veröffentlichungstag der Patentschrift:
**19.10.83**

(51) Int. Cl.³: **A 01 B 61/04**

(21) Anmeldenummer: **80104350.6**

(22) Anmeldetag: **24.07.80**

(54) Steinsicherung für Beetpflüge.

(30) Priorität: **10.04.80 DE 8009847 U**

(43) Veröffentlichungstag der Anmeldung:
**21.10.81 Patentblatt 81/42**

(45) Bekanntmachung des Hinweises auf die Patenterteilung:
**19.10.83 Patentblatt 83/42**

(84) Benannte Vertragsstaaten:
**AT DE FR GB**

(56) Entgegenhaltungen:
**DE-A-2 121 555**
**DE-A-2 500 273**
**DE-B-2 065 671**
**FR-A-2 341 254**

(73) Patentinhaber: **Rabewerk Heinrich Clausing, D-4515 Bad Essen 1 - Linne (DE)**

(72) Erfinder: **Albers, Heinrich, Rabber 32, D-4515 Bad Essen 1 (DE)**

(74) Vertreter: **Patentanwälte Dipl.-Ing. R. Schlee Dipl.-Ing. A. Missling, Bismarckstrasse 43, D-6300 Giessen (DE)**

## Steinsicherung für Beetpflüge

Die Erfindung betrifft eine Steinsicherung für Beetpflüge mit einem um eine in Arbeitsstellung im wesentlichen waagerechte Achse schwenkbaren Grindel, mit einem Arbeitsspeicher, der beim Auftreffen auf Hindernisse und dadurch verursachten Ausschwenken des Grindels aufgeladen wird, ein selbsttätiges Wiedereinziehen des Pflugkörpers in den Boden bewirkt und den Pflugkörper in der Arbeitsstellung hält, bei dem der Arbeitsspeicher in einem rohrförmig ausgebildeten Grindel angeordnet ist und zwischen einem am Grindel ortsfesten und einem beweglichen Lager gehaltert ist. Eine derartige Steinsicherung ist aus der FR-A-2 341 254 bekannt. Der Arbeitsspeicher wird bei Auslenkung des Grindels über ein elastisches Zugglied zusammengedrückt.

Bei einer vorstehend beschriebenen automatisch arbeitenden Steinsicherung bestimmt das Eigengewicht des am Grindel befestigten Pflugkörpers und die Federkraft, multipliziert mit ihrem Hebelarm, das Moment bzw. die Schwerkraft, bei dem ein Anheben des auf ein Hindernis stoßenden Schares beginnt. Ein Ansteigen dieser Scharkraft beim Ausschwenken ist nicht erwünscht, da es zu Beschädigungen des Pflugkörpers führen könnte. Darüber hinaus ist es von Interesse, den Arbeitsspeicher so klein wie möglich zu bauen, um zum einen Gewicht und damit Kosten zu sparen und zum anderen nicht so voluminös und sperrig zu bauen. Bei der bekannten Steinsicherung wird dies jedoch nicht erreicht. Es ist weiter bekannt, um den Arbeitsspeicher klein zu halten, diesen über ein Kniehebelsystem abzustützen.

Der Erfindung liegt die Aufgabe zugrunde, eine automatische Steinsicherung der vorstehend genannten Art vorzuschlagen, die zum einen mit einem kleinen Arbeitsspeicher auskommt, der nur ein geringes Gewicht hat und bei dem zum anderen die auf das Schar einwirkende Kraft beim Ausschwenken nicht ansteigt.

Diese Aufgabe wird erfindungsgemäß dadurch gelöst, daß am Grindel ein zweiarmiger Hebel gelagert ist, dessen einer Arm entweder direkt oder indirekt über eine Stange am Arbeitsspeicher angreift und daß der andere Arm des Hebels an einem am Pflugrahmen schwenkbar angeordneten Lenker angreift und mit diesem ein Kniehebelsystem bildet. Das Kniehebelsystem ist somit zwischen Grindel und Pflugrahmen angeordnet, wodurch es möglich ist, den Arbeitsspeicher im wesentlichen in Längsrichtung des Grindels zu beaufschlagen, wodurch Reibungskräfte im Inneren des Grindels vermieden werden.

Bei Verwendung einer Feder als Arbeitsspeicher ist das der Schwenkachse des Grindels benachbarte Ende der Feder am Grindel ortsfest gelagert, während das hintere Ende der Feder über eine Stange, die am zweiarmigen Hebel angreift, beaufschlagt ist. Der vordere Anlenkpunkt des zweiarmigen Hebels macht in etwa eine Bewegung in Längsrichtung, wobei die geringen Abweichungen aus der Längsrichtung des Grindels sich wegen der unmittelbaren Kraftübertragung über die Stange nur unmerklich auf die Feder auswirken. Diese wird somit in axialer Richtung zusammengedrückt, wodurch ein seitliches Ausweichen derselben und somit eine Reibung am Grindel nicht zu befürchten ist. Somit kann das Rohrinnenvolumen optimal für die Feder ausgenutzt werden.

Das vordere Ende des Lenkers am Rahmen ist einstellbar. Hierdurch kann der Kniehebelwinkel verstellt werden und somit die Haltekraft in der Arbeitsstellung des Grindels eingestellt werden. Eine weitere Möglichkeit der Einstellung bietet das auf der Zugstange angeordnete bewegliche Widerlager für die Feder. Mit Hilfe von Kontermuttern kann die gewünschte Vorspannung der Feder eingestellt werden. Bei hydraulischen Arbeitsspeichern ist die Vorwahl des Druckes möglich.

Weitere vorteilhafte Ausgestaltungen der Erfindung gehen aus den Unteransprüchen hervor.

Zwei Ausführungsbeispiele der Erfindung sind im folgenden anhand der Zeichnung näher beschrieben, in dieser zeigt

Fig. 1 einen Längsschnitt durch eine erfindungsgemäß ausgebildete Steinsicherung mit einer Feder als Arbeitsspeicher,

Fig. 2 eine Draufsicht auf die vordere Anlenkung des Grindels am Rahmen und

Fig. 3 ein weiteres Ausführungsbeispiel gemäß der Erfindung mit einem Hydraulikzylinder mit Druckspeicher als Arbeitsspeicher.

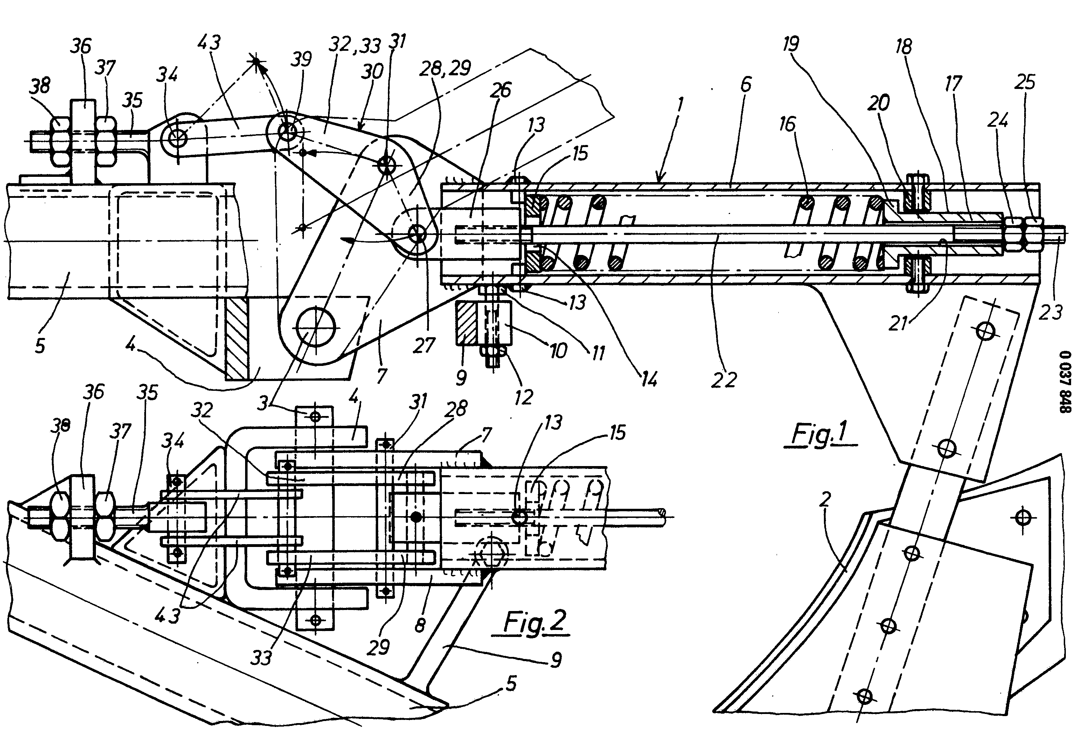

In Fig. 1 ist ein Grindel 1 mit einem Pflugkörper 2 eines Beetpfluges dargestellt, der um die Achse 3 schwenkbar ist. Die Achse 3 ist in einer Gabel 4 gelagert, die starr am Pflugrahmen 5 befestigt ist. Der Grindel besteht aus einem Rohr 6, an dem am vorderen Ende zwei Platten 7, 8 angeschweißt sind, die ihrerseits an der Achse 3 befestigt sind.

Am Rahmen 5 ist weiter ein Arm 9 angeschweißt, der eine Gewindebuchse 10 trägt, in der eine als Widerlager 11 dienende Schraube eingeschraubt ist, deren Höhe relativ zu Arm 9 mit Hilfe einer Kontermutter 12 einstellbar ist. Das Widerlager 11 dient zur Begrenzung des Schwenkwinkels des Grindels 1 nach unten und definiert die Arbeitsstellung.

Im Bereich des vorderen Endes sind mehrere Zapfen 13 in das Rohr 6 eingesetzt, die in einer Ebene liegen und als Widerlager für eine mit einer mittigen Ausnehmung 14 versehene Scheibe 15 dienen. Die Scheibe 15 wird durch eine als Arbeitsspeicher 16 dienende Feder gegen die Zapfen 13 gepreßt gehalten. Das andere Ende der Feder liegt an einem beweglichen Lager 17 an, das aus einem Führungsteil 18 besteht, der mit einem Bund 19 versehen ist. Das Führungsteil 18 gleitet in einer Bohrung eines Einsatzteiles 20, das als Führung für das bewegliche Lager 17 dient. Das Lager 17 weist gleichfalls eine zentrale Bohrung 21 auf, durch die eine Stange 22 greift. Das Ende der Stange 22 ist mit Gewinde 23 versehen. Auf das Ende der Zugstange sind zwei Kontermuttern 24, 25 aufgeschraubt, mit deren Hilfe das bewegliche Lager 17 längs der Stange 22 verschoben werden kann. Mit Hilfe der Kontermuttern 24, 25 kann die Vorspannung des Arbeitsspeichers 16 eingestellt werden.

Das vordere Ende der Zugstange 22 ist in einen Klotz 26 eingeschraubt oder verschweißt, der am vorderen Ende eine Achse 27 aufnimmt. An diese Achse sind zu beiden Seiten des Klotzes je ein Arm 28, 29 eines doppelarmigen Hebels 30 gelenkig angeschlossen. Der doppelarmige Hebel 30 selbst ist um eine Achse 31 schwenkbar, die in den Platten 7, 8 gelagert ist. Der andere Arm 32 bzw. 33 des zweiarmigen Hebels 30 ist gelenkig an einen Lenker 43 angeschlossen, der seinerseits gelenkig in 34 an eine Stellschraube 35 angeschlossen ist, die ihrerseits in eine fest mit dem Pflugrahmen 5 verbundene Konsole 36 eingeschraubt ist. Die Stellung der Stellschraube 35 relativ zur Konsole 36 wird durch zwei Muttern 37, 38 festgelegt.

Mit Hilfe der Stellschraube 35 läßt sich der Winkel zwischen dem Lenker 43 und dem Arm 32 des zweiarmigen Hebels 30 einstellen, so daß hierdurch in Verbindung mit der Vorspannung des Arbeitsspeichers 16 das Moment bzw. die Scharkraft bestimmt werden kann, bei dem bzw. der der Pflugkörper 2 bei Auftreffen auf ein Hindernis ausweicht und eine Schwenkung des Grindels 1 um die Achse 3 bewirkt. Trifft der Pflugkörper 2 auf ein Hindernis, so schwenkt der Pflugkörper 1 entgegen der Uhrzeigerrichtung um die Achse 3. Dabei wird der zweiarmige Hebel 30 um die gleiche Achse 3 verschwenkt, wodurch die Gelenkstelle 39 zwischen dem Lenker 43 und dem Arm 32 des zweiarmigen Hebels 30 nach oben ausgelenkt wird. Dies hat zur Folge, daß die Achse 27 relativ zur Achse 31 nach vorn verschwenkt wird, wodurch das bewegliche Lager 17 um den gleichen Teil nach vorn bewegt wird. Diese Bewegung bewirkt ein Zusammenpressen des Arbeitsspeichers 16. Nach Überwinden des Hindernisses wird der Pflugkörper durch den Arbeitsspeicher 16 wieder in den Boden eingezogen.

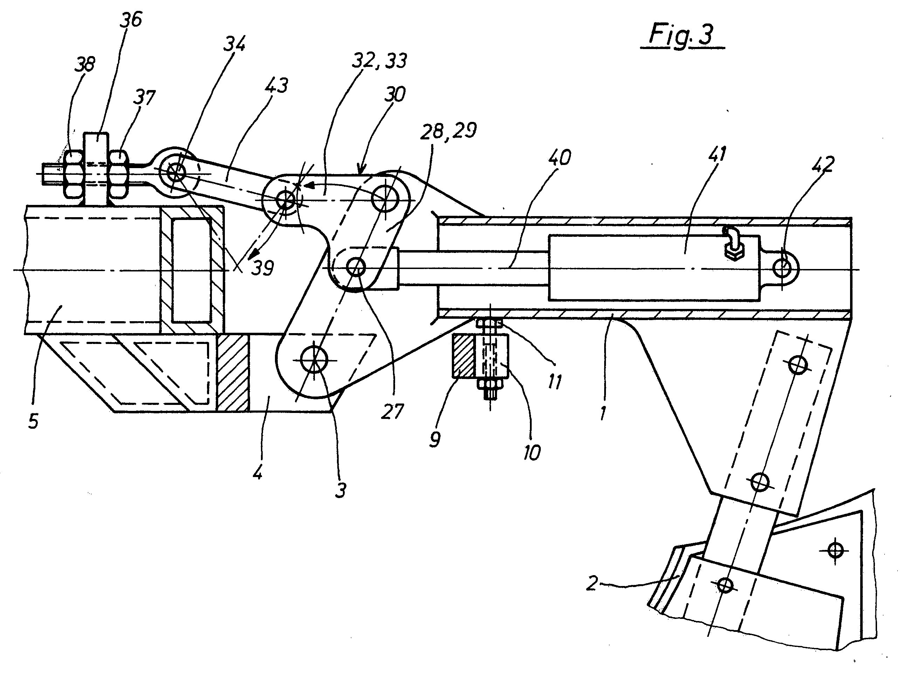

Bei dem in Fig. 3 beschriebenen Ausführungsbeispiel sind gleiche Teile mit gleichen Bezugszeichen versehen. Das Ausführungsbeispiel unterscheidet sich von dem vorhergehenden dadurch, daß anstelle einer Schraubenfeder ein Hydraulikzylinder mit einem Druckspeicher als Arbeitsspeicher verwendet wird. Die Kolbenstange 40 des Hydraulikzylinders 41 ist unmittelbar am Arm 28 des zweiarmigen Hebels 30 angeordnet. Mit seinem anderen Befestigungspunkt 42 ist der Hydraulikzylinder ortsfest im Grindel 1 gelagert. Beim Verschwenken des Grindels 1 um das Lager 3 wird der Gelenkpunkt 39 zwischen dem Lenker 43 und dem Arm 32 nach unten verschoben — im Gegensatz zu dem Ausführungsbeispiel nach Fig. 1 und 2 —, wodurch der zweiarmige Hebel 30 gleichfalls nach unten verschwenkt wird und der Arm 28 eine Bewegung nach hinten ausführt, wodurch der Hydraulikzylinder 41 zusammengedrückt wird. Hierbei vollführt der Anlenkpunkt 27 für die Kolbenstange 40 eine im wesentlichen lineare Bewegung in Richtung der Symmetrieachse des Grindels 1. Hierdurch wird sichergestellt, daß der Hydraulikzylinder beim Ausschwenkvorgang nur eine unwesentliche Schwenkbewegung um den Anlenkpunkt 42 ausführt, so daß nicht die Gefahr des Anliegens am Grindel besteht. Das gleiche gilt für das Ausführungsbeispiel nach den Fig. 1 und 2. Auch hier vollführt die Achse 27 eine im wesentlichen in Längsrichtung des Grindels liegende Bewegung, so daß das hintere freie Ende des Arbeitsspeichers 16 gleichfalls in Längsrichtung des Grindels verschoben wird. Hierdurch wird ein Ausknicken der Feder vermieden.

**Patentansprüche**

1. Steinsicherung für Beetpflüge mit einem um eine in Arbeitsstellung im wesentlichen waagerechte Achse (3) schwenkbaren Grindel, mit einem Arbeitsspeicher (16), der beim Auftreffen auf Hindernisse und dadurch verursachten Ausschwenken des Grindels (1) aufgeladen wird, ein selbsttätiges Wiedereinziehen des Pflugkörpers (2) in den Boden bewirkt und den Pflugkörper (2) in der Arbeitsstellung hält, bei dem der Arbeitsspeicher (16) in einem rohrförmig ausgebildeten Grindel (1) angeordnet ist und zwischen einem am Grindel ortsfesten (15) und einem beweglichen Lager (17) gehaltert ist, dadurch gekennzeichnet, daß am Grindel (1) ein zweiarmiger Hebel (30) gelagert ist, dessen einer Arm (28, 29) entweder direkt oder indirekt über eine Stange (22, 40) am Arbeitsspeicher (16) angreift und daß der andere Arm (32, 33) des Hebels (30) an einem am Pflugrahmen (5) schwenkbar angeordneten Lenker (43) angreift und mit diesem ein Kniehebelsystem bildet.

2. Steinsicherung nach Anspruch 1, dadurch gekennzeichnet, daß am Pflugrahmen (5) ein einstellbarer Anschlag (10, 11) für die Festlegung der Arbeitsstellung des Grindels (1) angeordnet ist.

3. Steinsicherung nach Anspruch 1 oder 2, dadurch gekennzeichnet, daß der zweiarmige Hebel (30) als Winkelhebel ausgebildet ist.

4. Steinsicherung nach einem der Ansprüche 1 bis 3, dadurch gekennzeichnet, daß der Anlenkpunkt (34) des Lenkers (43) am Rahmen (5) relativ zum Grindel (1) verstellbar ist.

5. Steinsicherung nach einem der Ansprüche 1 bis 4, dadurch gekennzeichnet, daß zwischen dem Arm (28, 29) des Winkelhebels (30) und dem Arbeitsspeicher (16) eine Stange (22, 40) eingeschaltet ist, die auf das bewegliche Lager (17) des Arbeitsspeichers (16) einwirkt.

6. Steinsicherung nach Anspruch 5, dadurch gekennzeichnet, daß das bewegliche Lager (17) des Arbeitsspeichers (16) am hinteren Ende des Grindels angeordnet ist und in einer Bohrung eines im Grindel befestigten Einsatzteiles (20) geführt ist.

7. Steinsicherung nach Anspruch 6, dadurch gekennzeichnet, daß das freie Ende der Zugstange mit Gewinde (23) versehen ist und daß das bewegliche Lager (17) an einer auf das Gewinde (23) der Zugstange (22) aufgeschraubten Mutter (24, 25) anliegt.

8. Steinsicherung nach Anspruch 7, dadurch gekennzeichnet, daß das bewegliche Lager (17) einen Bund (19) aufweist, der mit dem Einsatzteil (20) zusammenwirkt.

## Claims

1. Overload release for conventional ploughs comprising a plough beam which can be pivoted about a shaft (3), which is essentially horizontal in the working position, a working store (16) which, when obstacles are encountered and the plough beam (1) thereby swung out, is loaded, causes the plough body (2) to be automatically pulled into the ground again and holds the plough body (2) in the working position, the working store (16) being arranged in a tubular plough beam (1) and held between a bearing (15), which is fixed to the plough beam, and a mobile bearing (17), characterised in that a two-armed lever (30) is mounted on the plough beam (1), one arm (28, 29) of which acts either directly or indirectly via a rod (22, 40) on the working store (16) and that the other arm (32, 33) of the lever (30) acts on a guide rod (43), which is pivotably arranged at the plough frame (5), and forms a toggle joint system with the said guide rod (43).

2. Overload release according to claim 1, characterised in that an adjustable stop (10, 11) for determining the working position of the plough beam (1) is arranged on the plough frame (5).

3. Overload release according to claim 1 or 2, characterised in that the two-armed lever (30) is formed as an angle lever.

4. Overload release according to one of claims 1 to 3, characterised in that the pivotal point (34) of the guide rod (43) on the frame (5) can be adjusted relative to the plough beam (1).

5. Overload release according to one of claims 1 to 4, characterised in that a rod (22, 40) is arranged between the arm (28, 29) of the angle lever (30) and the working store (16) and acts on the mobile bearing (17) of the working store (16).

6. Overload release according to claim 5, characterised in that the mobile bearing (17) of the working store (16) is arranged at the rear end of the plough beam and is guided in a bore of an insert (20) secured in the plough beam.

7. Overload release according to claim 6, characterised in that the free end of the tie rod is provided with screw threads (23) and that the mobile bearing (17) rests against a nut (24, 25) screwed onto the screw thread (23) of the tie rod (22).

8. Overload release according to claim 7, characterised in that the mobile bearing (17) comprises a collar (19), which cooperates with the insert (20).

## Revendications

1. Dispositif de sécurité ou protection contre les pierres pour des charrues simples, comportant un age capable de pivoter autour d'un axe (3) sensiblement horizontal dans la position de travail, un accumulateur de travail (16) que est chargé lors de la rencontre d'obstacles et de la déviation résultante de l'age (1), qui produit une rentrée automatique du corps de charrue (2) dans le sol et qui maintient le corps de charrue (2) dans la position de travail, dispositif dans lequel l'accumulateur de travail (16) est disposé dans un age (1) établi sous forme tubulaire et maintenu entre un appui (15) situé en un emplacement fixe sur l'age et un appui (17) mobile, caractérisé en ce qu'un levier (30) à deux bras est monté sur l'age (1), levier dont un bras (28, 29) agit sur l'accumulateur de travail (16), directement ou indirectement par l'intermédiaire d'une tige (22, 40), et en ce que l'autre bras (32, 33) du levier (30) agit sur une bielle (43) disposée avec possibilité de pivotement sur le châssis de charrue (5) et constitue avec celle-ci un système de leviers à genouillère.

2. Sécurité contre les pierres selon la revendication 1, caractérisé en ce qu'une butée (10, 11) réglable est disposée sur le châssis de la charrue (5) pour fixer la position de travail de l'age (1).

3. Sécurité contre les pierres selon la revendication 1 ou 2, caractérisé en ce que le levier (30) à deux bras est établi sous forme d'un levier coudé.

4. Sécurité contre les pierres selon l'une des revendications 1 à 3, caractérisé en ce que le point d'articulation (34) de la bielle (43) est déplaçable sur le châssis (5) relativement à l'age (1).

5. Sécurité contre les pierres selon l'une des revendications 1 à 4, caractérisé en ce qu'entre le bras (28, 29) du levier coudé (30) et l'accumulateur de travail (16) une tige (22, 40) est insérée, qui agit sur l'appui mobile (17) de l'accumulateur de travail (16).

6. Sécurité contre les pierres selon la revendication 5, caractérisée en ce que l'appui mobile (17) de l'accumulateur de travail (16) est disposé à l'extrémité arrière de l'age et est guidé dans un perçage d'une pièce rapportée (20) fixée dans l'age.

7. Sécurité contre les pierres selon la revendication 6, caractérisé en ce que l'extrémité libre de la tige de traction est pourvue d'un

7

filetage (23) et en ce que le palier mobile (17) s'applique contre un écrou (24, 25) vissé sur le filetage (23) de la tige de traction (22).

8. Sécurité contre les pierres selon la revendication 7, caractérisé en ce que l'appui mobile (17) comporte un collet (19) qui coopère avec la pièce rapportée (20).

_Fig.1_

_Fig.2_

0 037 848

_Fig.3_

36 38 37 34 43 32,33 30 28,29 40 41 42

39 5 4 3 27 9 11 1 10 2

0 037 848